# DEMANDE DE BREVET EUROPEEN

(11) **EP 3 816 036 A1**
(43) Date de publication de la demande: **05.05.2021**
(21) Numéro de dépôt: 19306428.4
(22) Date de dépôt: 04.11.2019
(51) Int. Cl.: B64B 1/50, B64B 1/38

(54) **BALLON CAPTIF À ASSIETTE NULLE**

(71) Demandeur: Dirisolar SAS, 92100 Boulogne-Billancourt (FR)
(72) Inventeur: TIXIER, Philippe, 92100 BOULOGNE-BILLANCOURT (FR)
(74) Mandataire: Gauchet, Fabien Roland

(57) **Abrégé**

La présente invention a pour objet un ballon captif comprenant une enveloppe (2) qui s'étend principalement selon un axe longitudinal (A1) et qui porte deux points d'accrochage destinés à recevoir un câble. Les points d'accrochage sont ménagés de part et d'autre de l'enveloppe (2) sur un axe transverse (A2) qui est orthogonal à l'axe longitudinal (A1). L'axe transverse (A2) et l'axe longitudinal (A1) sont sécants en un point d'intersection (P). L'enveloppe (2) loge au moins un sac contenant un gaz porteur procurant un centre de portance (C1). Le centre de portance (C1), le point d'intersection (P) et un centre de gravité (C2) du ballon captif sont situés sur un axe vertical (A3) orthogonal à l'axe longitudinal (A1) et à l'axe transverse (A2).

## Description

La présente invention est du domaine des aérostats non motorisés. En particulier, l'invention a pour objet un ballon captif.

On connait un ballon captif dont une sustentation est assurée par un gaz plus léger que l'air, tel que de l'hélium, que le ballon captif contient. Le ballon captif est relié au sol par l'intermédiaire d'un câble dont une extrémité est enroulable sur un treuil fixé au sol. Au fur et à mesure que le câble est déroulé du treuil, le ballon captif s'élève jusqu'à atteindre un point haut en altitude.

Le ballon captif comprend notamment une enveloppe qui est par exemple de forme ovoïde et qui s'étend autour d'un axe longitudinal entre une extrémité avant et une extrémité arrière de l'enveloppe. Un tel axe longitudinal est notamment un axe de symétrie de l'enveloppe. L'axe longitudinal forme avec un axe horizontal un angle, communément dénommé assiette. Lorsqu'il n'y a pas de vent, le ballon captif est dans une position stabilisée au point haut avec une assiette nulle.

Un tel ballon captif est notamment destiné à emporter des charges utiles pour effectuer des observations et/ou des mesures physiques, chimiques, météorologiques ou analogues depuis le point haut. Pour connaître un environnement technologique proche de la présente invention, on pourra se reporter au document RU159572, par exemple.

Un problème général posé par les ballons captifs connus actuels réside dans le fait que, par vent fort, l'assiette d'un tel ballon captif de l'art antérieur devient non-nulle ce qui constitue un inconvénient pour les observations et/ou les mesures effectuées ou pour toute autre application réalisée à bord du ballon captif.

D'autre part, le fait que par un vent fort pouvant atteindre 220 km/h, l'assiette du ballon captif devient très importante : cela induit une portance aérodynamique et une augmentation de la trainée qui décuplent les efforts sur l'enveloppe du ballon captif menant généralement à la destruction de ce dernier.

La présente invention vient améliorer la situation.

Un ballon captif de la présente invention est un ballon captif comprenant une enveloppe qui s'étend principalement selon un axe longitudinal et qui porte deux points d'accrochage destinés à recevoir un câble. Les points d'accrochage sont ménagés de part et d'autre de l'enveloppe sur un axe transverse qui est orthogonal à l'axe longitudinal. L'axe transverse et l'axe longitudinal sont sécants en un point d'intersection. L'enveloppe loge au moins un sac contenant un gaz porteur procurant un centre de portance.

Selon la présente invention, le centre de portance, le point d'intersection et un centre de gravité du ballon captif sont situés sur un axe vertical orthogonal à l'axe longitudinal et à l'axe transverse.

Le ballon captif comprend avantageusement l'une quelconque au moins des caractéristiques techniques suivantes, prises seules ou en combinaison :
- l'enveloppe comprend une structure rigide porteuse d'une toile,
- l'enveloppe présente une conformation globalement ovoïde,
- la structure rigide est tubulaire et réalisée en un matériau léger, aluminium par exemple,
- l'axe longitudinal est un axe de symétrie de révolution de l'enveloppe,
- les points d'accrochage sont portés par des dispositifs d'accrochage respectifs issus de la structure rigide,
- on comprend que le centre de gravité du ballon captif est le centre de gravité du ballon captif équipé d'équipements nécessaires à la réalisation d'expériences, de mesures ou d'observations,
- un tel agencement du centre de portance, du point d'intersection et du centre de gravité sur un même axe vertical orthogonal à l'axe longitudinal et à l'axe transverse permet au ballon captif de ne prendre aucune assiette, y compris lorsqu'un vent relatif atteint 220 km/h,
- l'axe vertical est parallèle à la direction de la gravité terrestre,
- le point d'intersection est interposé entre le centre de portance et le centre de gravité sur l'axe vertical,
- chaque point d'accrochage est équipé d'une liaison pivot,
- la liaison pivot permet une rotation du câble autour de l'axe transverse,
- un espace interstitiel est ménagé entre une paroi inférieure de sac que comprend le sac et une paroi inférieure d'enveloppe que comprend l'enveloppe,
- un foyer des forces aérodynamiques en vol horizontal du ballon captif est situé sur l'axe longitudinal en étant placé entre le point d'intersection et une extrémité arrière du ballon captif,
- le gaz porteur est indifféremment constitué d'hydrogène ou d'hélium,
- dans le cas où le gaz porteur est constitué d'hydrogène, l'enveloppe loge un dispositif de capture d'une humidité et d'électrolyse d'eau condensée, au moins une batterie destinée à alimenter en énergie électrique ledit dispositif et au moins un panneau solaire pour alimenter en énergie électrique la batterie,
- l'enveloppe loge une pluralité de sacs,
- l'enveloppe comporte un dispositif d'empennage situé à proximité d'une extrémité arrière du ballon captif.

Le ballon captif comprend, en outre, un treuil et un câble interposé entre le ballon captif et le treuil.

La liaison pivot est préférentiellement ménagée entre chaque point d'accrochage et un brin respectif issu du même câble.

L'invention sera mieux comprise à la lecture de la description non limitative qui suit, rédigée au regard des dessins annexés, dans lesquels :
[Fig. 1] - La figure 1 est une vue schématique de côté d'un ballon captif selon la présente invention.
[Fig. 2] - La figure 2 est une vue schématique en coupe transversale du ballon captif représenté sur la figure 1.
[Fig. 3] - La figure 3 est une vue schématique en coupe longitudinale du ballon captif représenté sur les figures 1 et 2.
[Fig. 4] - La figure 4 est une vue schématique du ballon captif représenté sur les figures 1 à 3 équipé de ses câble et treuil.
[Fig. 5] - La figure 5 est une vue schématique en perspective du ballon captif représenté sur les figures 1 à 3.
[Fig. 6] - La figure 6 est une vue schématique partielle du ballon captif représenté sur la figure 4.
[Fig. 7] - La figure 7 est une vue schématique d'une variante de réalisation du ballon captif illustré sur les figures 1, 2, 3 et 5.

Sur les figures, un ballon captif 1 selon la présente invention est représenté à l'intérieur d'un repère orthonormé Oxyz, dans lequel l'axe Ox est un axe horizontal, parallèle à la surface du sol, l'axe Oy est un axe transversal et l'axe Oz est un axe vertical, parallèle à une direction de la gravité terrestre.

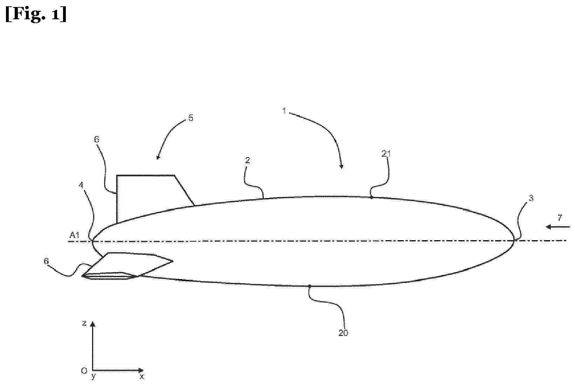

Sur la figure 1, le ballon captif 1 comprend une enveloppe 2 présentant une forme allongée qui s'étend principalement selon un axe longitudinal A1, parallèle à l'axe Ox, entre une extrémité avant 3 de l'enveloppe 2 et une extrémité arrière 4 de l'enveloppe 2. Préférentiellement, l'axe longitudinal A1 est un axe de symétrie de l'enveloppe 2 qui présente une conformation sensiblement ovoïde. L'enveloppe 2 est pourvue d'un dispositif d'empennage 5, située à proximité de l'extrémité arrière 4 de l'enveloppe 2, le dispositif d'empennage 5 étant prévu pour assurer une stabilité au ballon captif 1 dans l'air. Le dispositif d'empennage 5 comprend par exemple au moins trois branches 6 dont le rôle est d'assurer la stabilité intrinsèque du ballon captif 1 plongé dans un vent relatif 7, qui peut atteindre une vitesse de 220 km/h. Le ballon captif 1 est ainsi avantageusement stable en vol horizontal sans besoin d'une commande d'assiette, ni de lacet.

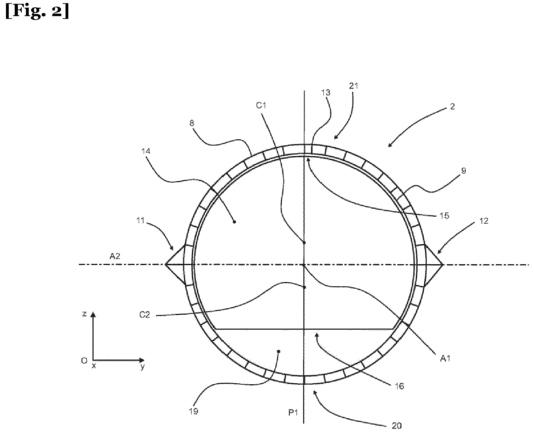

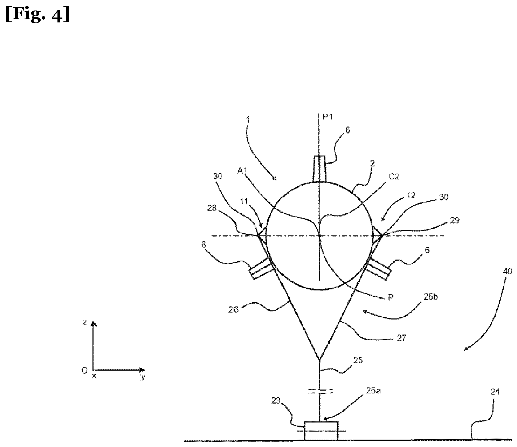

Sur la figure 2, l'enveloppe 2 comprend une toile 8 qui est portée par une structure rigide 9. La structure rigide 9 présente notamment une section circulaire selon une coupe réalisée dans le plan Oyz. La structure rigide 9 est tubulaire et réalisée en aluminium pour être légère. La structure rigide 9 est pourvue de deux dispositifs d'accrochage 11, 12, dont un premier dispositif d'accrochage 11 et un deuxième dispositif d'accrochage 12, qui sont ménagés à l'extérieur de l'enveloppe 2. Plus particulièrement, les dispositifs d'accrochage 11, 12 sont ménagés en vis-à-vis l'un de l'autre selon un axe transverse A2 qui est parallèle à l'axe Oy. Chaque dispositif d'accrochage 11, 12 est destiné à être relié au sol par l'intermédiaire d'un câble comme décrit ci-après sur la figure 4.

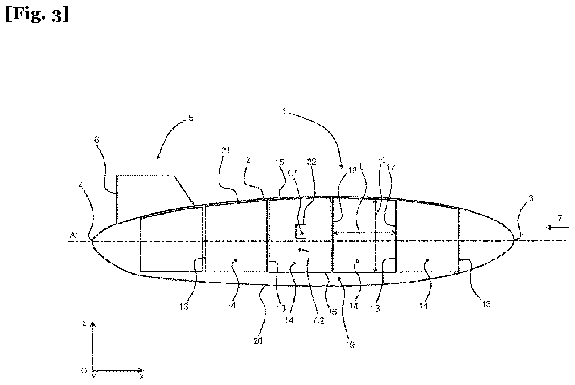

En se reportant également sur la figure 3, l'enveloppe 2 loge une pluralité de sacs 13 remplis d'un gaz porteur 14 qui est plus léger que l'air, tel que l'hélium, l'hydrogène ou analogue. Autrement dit, la structure rigide 9 est compartimentée et agencée pour loger les sacs 13 contenant le gaz porteur 14. Chaque sac 13 présente une hauteur de sac H qui est supérieure à une longueur de sac L. La hauteur de sac H est prise selon une direction parallèle à l'axe Oz entre une paroi supérieure de sac 15 et une paroi inférieure de sac 16. La longueur de sac L est prise selon une direction parallèle à l'axe Ox entre une paroi avant de sac 17 et une paroi arrière de sac 18. Un espace interstitiel 19 est ménagé entre la paroi inférieure de sac 16 et une paroi inférieure d'enveloppe 20 qui est la paroi du ballon captif 1 en vis-à-vis du sol. Autrement dit, chaque sac 13 comporte un volume mort disponible pour une expansion du sac 13 afin d'occuper au moins partiellement le volume interstitiel 19.

Il résulte de ces dispositions qu'un centre de portance Ci de l'ensemble du gaz porteur 14 est situé au-dessus de l'axe longitudinal A1 en raison du fait que les sacs 13 ne sont pas totalement remplis et tendent à venir au contact avec une partie de la structure rigide 9 située au niveau d'une paroi supérieure d'enveloppe 21. La paroi supérieure d'enveloppe 21 est une portion d'enveloppe 2 qui est ménagée à l'opposé et en vis-à-vis de la paroi inférieure d'enveloppe 20. Ainsi, cela permet de conserver un espace de ventilation entre la toile 8 et les sacs 13 au niveau de la paroi supérieure d'enveloppe 21.

Il résulte aussi de ces dispositions qu'un centre de gravité C2 du ballon captif 1 associé aux équipements embarqués par ce dernier est situé à la verticale sous le centre de portance Ci. Autrement dit, le centre de portance Ci du ballon captif 1 surplombe le centre de gravité C2 du ballon captif 1.

Il résulte encore de ces dispositions que l'axe longitudinal A1 surplombe le centre de gravité C2. Autrement dit, dans un plan médian P1, parallèle au plan Oxz, l'axe longitudinal A1 est interposé entre le centre de portance Ci et le centre de gravité C2.

On note que dans un plan longitudinal P2, parallèle au plan Oxz, le centre de portance Ci est situé à l'intérieur d'une plage de centre de portance 22 qui surplombe l'axe longitudinal A1 et l'axe de gravité C2.

Il découle de l'ensemble de ces dispositions que le ballon captif 1 est statiquement stable. Autrement dit, le ballon captif 1 ne présente sensiblement aucune assiette si ce n'est celle générée par de faibles oscillations dues aux turbulences de l'air.

On comprend aussi qu'une altitude du ballon captif 1 est fonction d'un taux de remplissage des sacs 13 en gaz porteur 14. On note également que plus le remplissage des sacs 13 en gaz porteur 14 est partiel au niveau du sol, plus l'altitude accessible est grande mais que quand l'altitude accessible augmente, alors la charge utile susceptible d'être embarquée diminue.

Sur la figure 4, le ballon captif 1 comporte en outre un treuil 23 et un câble 25. Le ballon captif 1 est relié au treuil 23 situé au sol 24 par l'intermédiaire du câble 25. Le câble 25 comporte une première extrémité 25a qui est relié au treuil 23 de telle sorte que le câble 25 puisse s'enrouler sur le treuil 23. Le câble 25 comporte une deuxième extrémité 25b qui est scindée en deux brins 26, 27, dont un premier brin relié à un premier point d'accrochage 28 du premier dispositif d'accrochage 11 et un deuxième brin 27 relié à un deuxième point d'accrochage 29 du deuxième dispositif d'accrochage 12. Plus particulièrement, chaque brin 26, 27 est relié au point d'accrochage 28, 29 auquel il est affecté par l'intermédiaire d'une liaison pivot 30 qui permet une bascule du brin 26, 27 autour de l'axe transverse A2 qui relie les points d'accrochage 28, 29.

L'axe longitudinal A1 et l'axe transverse A2 sont sécants en un point d'intersection P qui est situé à la verticale sous le centre de portance Ci des sacs 13 de gaz porteur 14. Autrement dit, le centre de portance Ci et le point d'intersection P de l'axe longitudinal A1 et de l'axe transverse A2 sont placés dans le plan médian P1 et le centre de portance Ci surplombe le point d'intersection P.

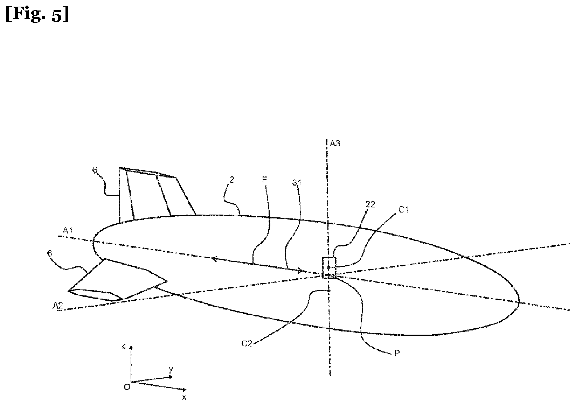

Sur la figure 5, le centre de portance Ci, le point d'intersection P et le centre de gravité C2 sont situés sur un même axe vertical A3, parallèle à l'axe Oz. Plus particulièrement, le point d'intersection P est interposé entre le centre de portance Ci et le centre de gravité C2 sur l'axe vertical A3.

Ces dispositions sont telles qu'un foyer des forces aérodynamiques F en vol horizontal du ballon captif 1 est situé sur l'axe longitudinal A1 en arrière du point d'intersection P en étant compris à l'intérieur d'une plage de foyer des forces aérodynamiques 31.

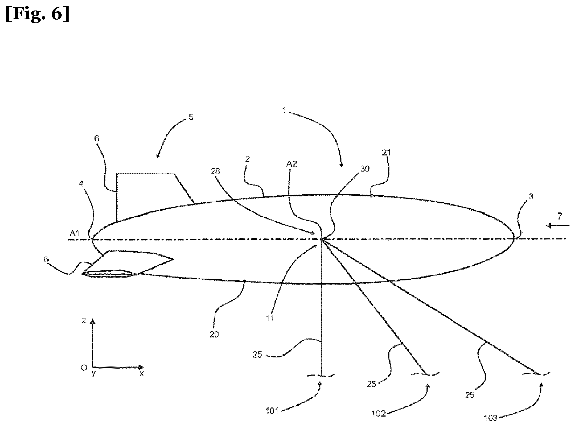

Il en résulte que, quel que soit un vent relatif 7, le ballon captif 1 est maintenu sensiblement horizontal en raison notamment d'un pivotement du câble 25 autour de l'axe transverse A2 tel qu'illustré sur la figure 6. Ainsi, sur cette figure, le câble 25 est représenté selon trois positions successives 101, 102, 103 prises respectivement selon une force croissante du vent relatif 7, dont une première position 101 dans laquelle la vitesse du vent relatif 7 est nulle, une deuxième position dans laquelle la vitesse du vent relatif 7 est moyenne et une troisième position 103 dans laquelle la vitesse du vent relatif 7 est forte, le passage du câble 25 d'une position à une autre étant obtenue par l'intermédiaire de la liaison pivot 30 ménagée aux points d'accrochage 28, 29. Ainsi, plus la vitesse du vent relatif 7 augmente, plus le câble 25 s'incline par rapport à une direction parallèle à l'axe Oz.

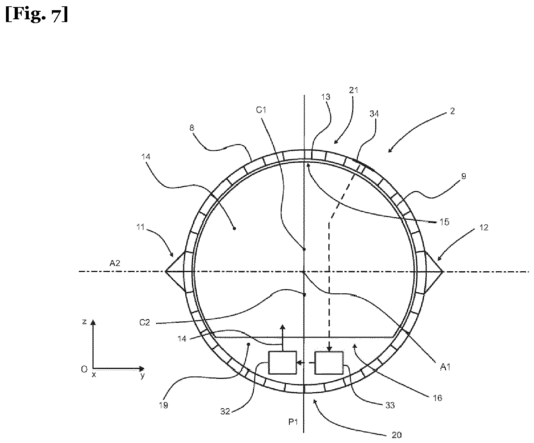

Sur la figure 7, est représentée une variante de réalisation du ballon captif 1 dans laquelle le gaz porteur 14 est constitué d'hydrogène. Dans ce cas-là, le ballon captif est par exemple équipé d'un dispositif 32 de capture d'une humidité dans l'air qui est apte à réaliser une hydrolyse de l'eau condensée issue de cette humidité afin de produire de l'hydrogène qui est réinjecté à l'intérieur des sacs 13. Ceci permet de compenser une perte d'hydrogène hors des sacs et permet ainsi de prolonger une mission d'observation effectuée par le ballon captif 1. Ledit dispositif 32 est par exemple alimenté en énergie électrique par au moins une batterie 33 elle-même alimentée par au moins un panneau solaire 34.

## Revendications

1. Ballon captif (1) comprenant une enveloppe (2) qui s'étend principalement selon un axe longitudinal (A1) et qui porte deux points d'accrochage (28, 29) destinés à recevoir un câble (25), les points d'accrochage (28, 29) étant ménagés de part et d'autre de l'enveloppe (2) sur un axe transverse (A2) qui est orthogonal à l'axe longitudinal (A1), l'axe transverse (A2) et l'axe longitudinal (A1) étant sécants en un point d'intersection (P), l'enveloppe (2) logeant au moins un sac (13) contenant un gaz porteur (14) procurant un centre de portance (C1), dans lequel le centre de portance (C1), le point d'intersection (P) et un centre de gravité (C2) du ballon captif (1) sont situés sur un axe vertical (A3) orthogonal à l'axe longitudinal (A1) et à l'axe transverse (A2).

2. Ballon captif (1) selon la revendication 1, dans lequel le point d'intersection (P) est interposé entre le centre de portance (C1) et le centre de gravité (C2) sur l'axe vertical (A3).

3. Ballon captif (1) selon l'une quelconque des revendications précédentes, dans lequel chaque point d'accrochage (28, 29) est équipé d'une liaison pivot (30).

4. Ballon captif (1) selon l'une quelconque des revendications précédentes, dans lequel un espace interstitiel (19) est ménagé entre une paroi inférieure de sac (16) que comprend le sac (13) et une paroi inférieure d'enveloppe (20) que comprend l'enveloppe (2).

5. Ballon captif (1) selon l'une quelconque des revendications précédentes, dans lequel un foyer des forces aérodynamiques (F) en vol horizontal du ballon captif (1) est situé sur l'axe longitudinal (A1) en étant placé entre le point d'intersection (P) et une extrémité arrière (4) du ballon captif (1).

6. Ballon captif (1) selon l'une quelconque des revendications précédentes, dans lequel le gaz porteur (14) est indifféremment constitué d'hydrogène ou d'hélium.

7. Ballon captif (1) selon la revendication 6, dans lequel, dans le cas où le gaz porteur (14) est constitué d'hydrogène, l'enveloppe (2) loge un dispositif (32) de capture d'une humidité et d'électrolyse d'eau condensée, au moins une batterie (33) destinée à alimenter en énergie électrique ledit dispositif (32) et au moins un panneau solaire (34) pour alimenter en énergie électrique la batterie (33).

8. Ballon captif (1) selon l'une quelconque des revendications précédentes, dans lequel l'enveloppe (2) loge une pluralité de sacs (13).

9. Ballon captif (1) selon l'une quelconque des revendications précédentes, dans lequel l'enveloppe comporte (2) un dispositif d'empennage (5) situé à proximité d'une extrémité arrière (4) du ballon captif.

10. Ballon captif (1) selon l'une quelconque des revendications précédentes, dans lequel le ballon captif (1) comprend en outre un treuil (23) et un câble (25) interposé entre le ballon captif (1) et le treuil (23).

11. Ballon captif (1) selon la revendication 10 et la revendication 3, dans lequel la liaison pivot (30) est ménagée entre chaque point d'accrochage (28, 29) et un brin respectif (26, 27) issu du même câble (25).
